# FASCICULE DE BREVET EUROPEEN

(11) **EP 2 735 009 B1**
(45) Date de publication et mention de la délivrance du brevet: **04.07.2018**
(21) Numéro de dépôt: 12735910.7
(22) Date de dépôt: 20.07.2012
(51) Int. Cl.: H01H 1/00, H01H 57/00, H01H 59/00, H01G 5/16

(54) **COMPOSANT MEMS-RF A MATERIAU FERROELECTRIQUE**
RF-MEMS-BAUELEMENT MIT FERROELEKTRISCHEM MATERIAL
RF MEMS COMPONENT COMPRISING FERROELECTRIC MATERIAL

(30) Priorité: 20.07.2011 FR 1102258
(43) Date de publication de la demande: 28.05.2014
(73) Titulaire: THALES, 92200 Neuilly-sur-Seine (FR); Centre National de la Recherche Scientifique, 75016 Paris (FR); Universite Paris-Sud 11, 91405 Orsay (FR)
(72) Inventeur: BUI-THI, Kim-Anh, F-91570 Bievres (FR); GARRY, Guy, F-91767 Palaiseau cedex (FR); LEULIET, Aude, F-75012 Paris (FR); LECOEUR, Philippe, F-91440 Bures Sur Yvette (FR); PHAM COLOMBAN, Thi Mai, F-94260 Fresnes (FR)
(74) Mandataire: Brunelli, Gérald
(86) Numéro de dépôt international: PCT/EP2012/064289
(87) Numéro de publication internationale: WO 2013/011128

(56) Documents cités:
- EP-A1- 2 317 533
- US-A1- 2006 125 746
- KUEGELER C ET AL: "INTEGRATION, ELECTRICAL AND ELECTROMECHANICAL PROPERTIES OF PZT AND PMN-PT THIN FILMS FOR MEMS APPLICATIONS", PROCEEDINGS OF SPIE, SPIE, US, vol. 4699, 1 janvier 2002 (2002-01-01), pages 114-123, XP008058085, ISSN: 0277-786X, DOI: 10.1117/12.474966
- LAHIRI S K ET AL: "RF MEMS SWITCH: An overview at- a-glance", COMPUTERS AND DEVICES FOR COMMUNICATION, 2009. CODEC 2009. 4TH INTERNATIONAL CONFERENCE ON, IEEE, PISCATAWAY, NJ, USA, 14 décembre 2009 (2009-12-14), pages 1-5, XP031624595, ISBN: 978-1-4244-5073-2

## Description

Le domaine de l'invention est celui des micro-interrupteurs encore dénommés « switch » réalisés en technologie MEMS, l'acronyme MEMS signifiant « Micro Electro Mechanical System ». Le domaine privilégié d'application concerne les systèmes radio-fréquence ou « RF » et plus précisément celui des commutateurs MEMS RF à basses fréquences pour les télécommunications (fréquence inférieure à 3GHz) et les radars (10GHz).

Les switchs MEMS RF sont la plupart du temps des composants micro-électroniques élaborés à partir de deux technologies de guide d'onde, la première est dite coplanaire, la seconde est dite « micro-stripe ». Dans la première technologie, les lignes utilisées pour la transmission du signal et les lignes de masse sont déposées d'un même côté d'un substrat. Dans la seconde technologie, les lignes utilisées pour la transmission du signal sont déposées sur une première face du substrat et les lignes ou le plan de masse sur l'autre face du substrat.

Le principe de fonctionnement des switch MEMS RF est le suivant. Au moyen d'une électrode de commande, on exerce une force électrostatique sur un objet mécanique de très faibles dimensions disposé au voisinage de lignes de transmission. Le déplacement ou la déformation de l'objet soumis à cette force fait varier un paramètre électronique qui est le plus souvent une résistance ou une capacité. Cette variation interrompt ou rétablit la transmission entre les lignes. Dans le cas de la technologie coplanaire, les switch MEMS RF peuvent avoir différentes configurations géométriques et mécaniques. Ainsi, pour réaliser un interrupteur de type ohmique à actionnement électrostatique, on réalise une poutre cantilever dont le déplacement assure le contact ohmique. Pour réaliser un interrupteur de type capacitif, on utilise préférentiellement des dispositifs à « pont » ou à membrane suspendue.

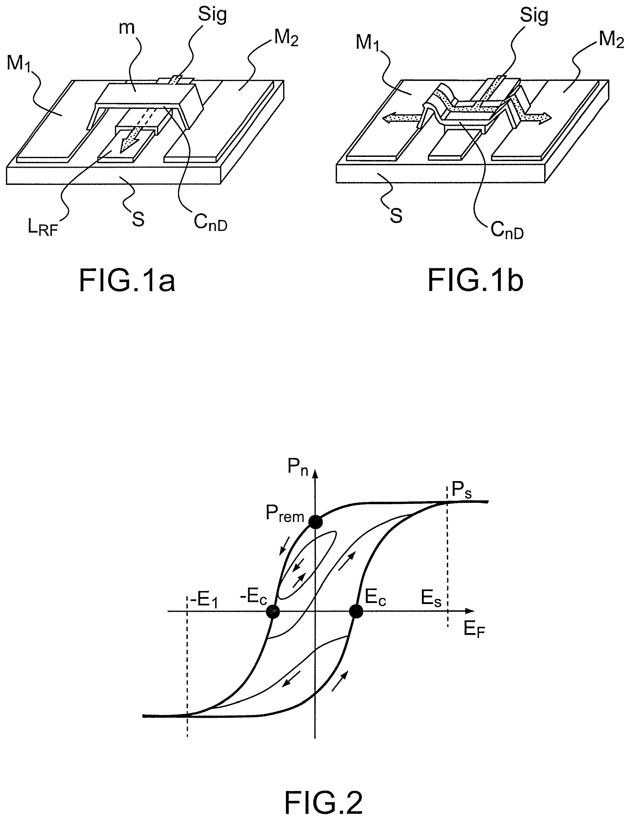

Le principe de fonctionnement de ce type de dispositif est le suivant dans le cas le plus simple de l'utilisation en micro-interrupteur et est illustré en figures 1a et 1b qui représentent respectivement un état dans lequel le signal passe et un état dans lequel le signal est court-circuité.

Plus précisément, une membrane m ou une poutre métallique de très faible épaisseur est maintenue suspendue par des supports au dessus d'une ligne de transmission L_{RF} réalisée à la surface d'un substrat S er dans laquelle peut être propagé un signal s_{ig}. La membrane peut être soumise à une tension électrique au moyen d'une électrode de commande. En l'absence de tension appliquée, la membrane est suspendue au-dessus de la ligne L_{RF} à une certaine hauteur ou un certain premier « gap ». On réalise ainsi un condensateur dont les armatures sont constituées d'une part par la membrane qui constitue l'électrode haute et d'autre part par les surfaces conductrices M₁ et M₂, de la ligne de transmission qui constituent l'électrode basse.

Lorsque l'on applique une tension croissante sur l'électrode de commande, la membrane est soumise à une force électrostatique qui la déforme. Les armatures du condensateur sont séparées alors d'un second « gap » g très inférieur au premier. La capacité du condensateur a donc fortement varié. Selon le montage électronique, la variation de cette capacité peut être utilisée pour réaliser un micro-interrupteur.

Il est possible d'interposer une couche de diélectrique C_{MD} isolant de façon à éviter le contact électrique direct entre la membrane et la ligne de transmission L_{RF}.

Les principaux avantages de ce type de dispositif sont essentiellement :
- l'emploi de techniques de réalisation dérivées des technologies classiques de fabrication de circuits micro-électroniques en couches minces, qui permettent d'obtenir des coûts de réalisation faibles, en comparaison d'autres technologies tout en garantissant une fiabilité élevée ;
- les très faibles puissances électriques consommées, pratiquement nulles ;
- l'encombrement. Les dimensions des différents éléments n'excèdent pas quelques centaines de micromètres. On réalise ainsi un micro-commutateur dans une surface de l'ordre du dixième de millimètre carré ;
- les performances en utilisation hyperfréquence. Ce type de commutateur présente des pertes d'insertion très faibles, bien inférieures à celles de dispositifs assurant les mêmes fonctions.

Dans cette configuration, la fréquence de fonctionnement d'un commutateur RF MEMS est ajustable en modifiant ses dimensions et les matériaux qui le composent (diélectrique). Les MEMS RF classiques utilisent des diélectriques tels que Si₃N₄, SiO₂ (constante diélectrique de 4 à 7)...comme décrit dans les articles : C. Goldsmith et al. « Performance of low-loss RF-MEMS capacitive switches" IEEE (1998) 269 et Z. Peng et al. « Top vs bottom charging of the dielectric in RF MEMS capacitive switches », IEICE 2006. Leur plage de fréquence de fonctionnement est comprise entre 20GHz et 40GHz. Cependant pour des applications à plus basse fréquence comme par exemple les applications au domaine des télécommunications (fréquence inférieure à 3GHz) ou au domaine des radars (10GHz), ces matériaux ont une constante diélectrique insuffisante. L'utilisation de matériau ferroélectrique constitue une solution permettant d'élargir de manière importante la plage de fréquence de fonctionnement de ces dispositifs. De tels commutateurs MEMS RF sont, par exemple, décrits dans les documents EP 2 317 533 A1 et US 2006/125746 A1. Les matériaux ferroélectriques les plus utilisés pour les applications MEMS (FE-MEMS), sont les ferroélectriques classiques (BaTiO₃, PZT). Les couches minces ferroélectriques étudiées pour les applications MEMS (épaisseur entre 200nm et 400nm) sont des couches minces polycrystallines texturées d'orientation préférentielle <001> afin de profiter de la meilleure réponse électromécanique et de la constante diélectrique la plus importante comme décrit dans l'article de S. Trolier-Mckinstry et P. Murait, "Thin Films piezoelectrics for MEMS", J. of Electroceramics, 12 (2004) . L'orientation fréquemment observée dans ces couches minces est <111> du fait que les couches minces métalliques sur lesquelles sont déposées ces couches sont souvent orientées <111>.

Le fonctionnement d'un commutateur MEMS à base de matériau ferroélectrique encore dénommé FE-MEMS RF est décrit par Jean-Michel Sallese et Pierre Fazan dans l'article « Switch and RF ferroelectric MEMS : a new concept»; Sensors and Actuators A 109 (2004) 186-194. Contrairement aux diélectriques classiques où la relation entre la polarisation et le champ externe est linéaire, la polarisation d'un ferroélectrique est non linéaire en fonction du champ et est caractérisée par une polarisation rémanente Pᵣ et une polarisation de saturation Pₛ.

Si on soumet le matériau à une tension correspondant à un champ électrique supérieur à Eₛ (champ de saturation) puis l'on coupe cette tension, la polarisation du matériau ne s'annule pas mais reste égale à la polarisation rémanente comme l'illustre la figure 2.

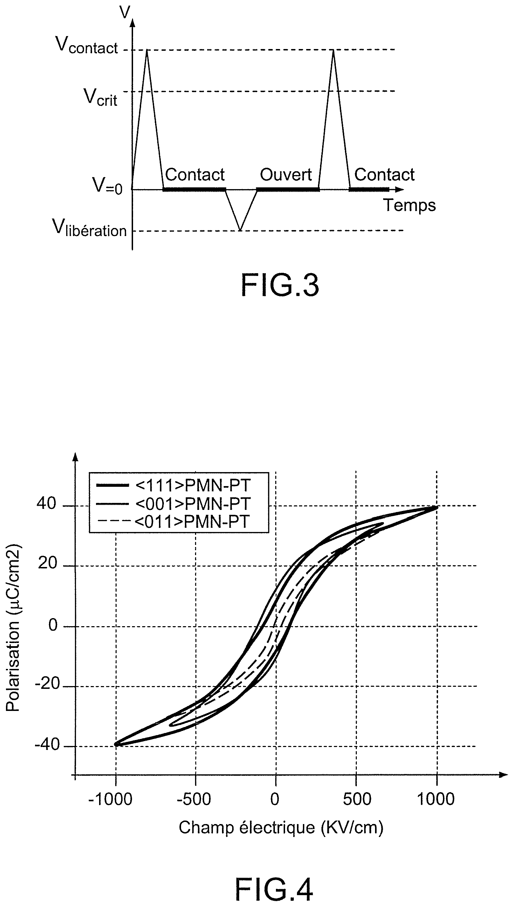

La tension d'actionnement du MEMS provoque dans le matériau ferroélectrique un champ électrique supérieur à Eₛ. Ainsi annuler la tension aux bornes du dispositif ne permet pas à la membrane de remonter en position haute à cause de l'existence de Pᵣ. Le mode d'actionnement doit donc nécessairement être différent de celui des MEMS RF classiques. Comme le montre la figure 3, on utilise une impulsion de tension afin d'actionner la membrane.

Lorsque l'on souhaite faire remonter ladite membrane, on doit donc appliquer un nouveau pulse Vᵣₑₗₑₐₛₑ - de signe contraire au premier - afin d'annuler la polarisation du ferroélectrique. Finalement, dans ce mode d'actionnement la membrane reste commutée alors qu'elle n'est soumise à aucune tension.

Ce dernier point nécessite l'utilisation de ferroélectriques dits durs. Il s'agit de matériaux ayant un cycle d'hystérésis carré (ou très élargi en tension), une forte polarisation rémanente, un champ coercitif élevé et un temps de déchargement très long (qui peut aussi durer des années dans les applications pour des mémoires).

Seuls ces ferroélectriques durs, par opposition aux ferroélectriques doux correspondant à des matériaux ayant un cycle d'hystérésis moins carré, une forte polarisation rémanente, un champ coercitif élevé mais un temps de déchargement plus court de quelques secondes jusqu'à quelques minutes, présentent un courant de fuite très faible qui empêche le déchargement de la polarisation rémanente en fonction du temps. Ceci permet de garantir la fiabilité du dispositif. En effet, si le ferroélectrique se décharge, la polarisation s'annule au fur et à mesure et la membrane remonte avant la fin du pulse « release » ou reste collée après le pulse « release ». Le dispositif présente alors une difficulté de contrôle qui est lié directement à la fatigue du matériau.

Le dispositif de Sallese et Fazan nécessite ainsi l'utilisation d'un ferroélectrique dur. Il est adapté à des applications pour lesquelles le temps d'actionnement n'est pas limitant (le temps d'actionnement est de l'ordre de quelques secondes). En effet, les durées d'impulsion nécessaires à modifier la polarisation (V_{contact} et Vᵣₑₗₑₐₛₑ) peuvent être très longues (quelques dizaines de µs jusqu'à quelques ms).

Les matériaux ferroélectriques durs présentent une perte diélectrique très importante au passage du champ coercitif. Cette forte perte provoque un échauffement lors d'un contact avec la membrane.

Ainsi les MEMS-RF à base de ferroélectriques réalisés jusqu'à ce jour présentent deux inconvénients majeurs : une réponse lente du dispositif et une instabilité thermique.

Dans ce contexte la présente invention a pour objet un commutateur MEMS RF utilisant comme matériau diélectrique constitutif de la membrane un matériau ferroélectrique de très forte permittivité et présentant un temps de réponse rapide, ledit matériau étant un matériau piézo-électrostrictif de forte constante diélectrique plus élevée que celle d'un matériau ferroélectrique dur, ayant un champ coercitif et une polarisation rémanente quasi nulle. La perte diélectrique dans les piézoélectrostrictifs prend sa valeur maximale au champ coercitif (qui est proche de 0) et diminue dès que le champ diélectrique augmente. Ces matériaux ne provoquent donc aucun échauffement lors d'un contact avec la membrane.

Plus précisément la présente invention a pour objet un composant MEMS-RF à temps d'activation rapide et destiné à des applications dans des domaines de fréquences inférieurs à 10 GHz comprenant un substrat isolant comportant à la surface dudit substrat au moins une ligne RF située entre deux surfaces conductrices, ladite ligne RF étant au moins localement recouverte d'une couche de matériau diélectrique ledit composant comprenant en outre une membrane située au dessus de ladite ligne RF et en contact avec les deux surfaces conductrices caractérisé en ce que ledit matériau diélectrique est un matériau ferroélectrique de constante diélectrique supérieure à 600 et de polarisation rémanente inférieure à 5 µC.cm⁻². Avantageusement le temps d'activation est inférieur à une microseconde.

Ainsi le dispositif selon l'invention comprenant un matériau piézoélectrique électrostrictif fonctionne comme un commutateur MEMS RF classique. L'existence du courant de fuite dans ces matériaux aide à évacuer des charges pour un relâchement rapide de la membrane et l'intégration de ces matériaux permet au dispositif de travailler dans une plage de fréquence très large (de 500MHz à 20GHz).

Selon une variante de l'invention, le matériau ferroélectrique est un des matériaux suivants : PbMg1/3Nb2/3O3-xPbTiO3 (PMN-PT), Pb1-xLayZrxTiO3 (PLZT), Pbln1/2Nb1/2O3- PbTiO3 (PIN-PT), PbZn1/3Nb2/3O3-PbTiO3 (PZN-PT), PbMg1/3Nb2/3O3- Pbln1/2Nb1/2O3- PbTiO3 (PMN-PIN-PT), Pb(Mg1/3Nb2/3)O3- Pb(Y1/2Nb1/2Ti)O3-PbTiO3 (PMN-PYN-PT).

Selon une variante de l'invention, le matériau ferroélectrique est du PMN-PT de composition 65/35 et d'orientation cristalline <011>.

Selon une variante de l'invention, l'épaisseur de la couche de matériau ferroélectrique est de l'ordre de quelques centaines de nanomètres.

Selon une variante de l'invention, le composant comprend en outre une couche intermédiaire entre la ligne RF et la couche de matériau ferroélectrique.

Selon une variante de l'invention, et dans le cas d'un matériau de PMN-PT, la ligne RF comprend une structure multicouche pouvant par exemple comprendre l'ensemble de couches suivant : une couche de platine/ une couche d'or/ une couche de platine, sur le substrat isolant, d'épaisseurs respectivement pouvant par exemple être d'environ 200nm/500nm/50nm. La couche d'or assure une bonne adaptation à la fréquence. La première couche de platine est déposée à 600°C et assure une bonne stabilité thermique de la structure (la couche ferroélectrique est déposée à 600°C). La deuxième couche de platine évite la diffusion du Titane existant dans PMN-PT dans l'or.

Selon une variante de l'invention, le substrat est en saphir ou en silicium.

L'invention a aussi pour objet un procédé de fabrication d'un composant MEMS-RF selon l'invention et comprenant la réalisation d'une couche de matériau ferroélectrique à la surface d'un substrat caractérisé en ce que la réalisation de ladite couche de matériau ferroélectrique est effectuée par dépôt sur une couche d'accrochage.

Selon une variante de l'invention, la couche d'accrochage est en oxyde conducteur pouvant être pré-déposée juste avant et dans les mêmes conditions que celles pour le dépôt de la couche de matériau ferroélectrique. Par exemple cette couche d'accrochage peut être en La_{1/3}Sr_{2/3}MnO₃.

Selon une variante de l'invention, la couche de matériau ferroélectrique est réalisée par ablation laser d'une cible sur un substrat mis en rotation et chauffé.

L'invention sera mieux comprise et d'autres avantages apparaîtront à la lecture de la description qui va suivre donnée à titre non limitatif et grâce aux figures annexées parmi lesquelles :
- les figures 1a et 1b illustrent le fonctionnement d'un dispositif MEMS selon l'art connu ;
- la figure 2 illustre l'évolution de la polarisation en fonction du champ appliqué à un matériau ferroélectrique à polarisation rémanente ;
- la figure 3 illustre les modes de fonctionnement d'un composant MEMS RF à base de matériau ferroélectrique ;
- la figure 4 illustre l'évolution de la polarisation rémanente, suivant différentes orientations, pour le matériau PMN-PT ;
- la figure 5 illustre le mode de fonctionnement classique d'un MEMS-RF ;
- la figure 6 illustre la variation de la constante diélectrique de la couche mince PMN-PT (65/35) en fonction de la température ;
- la figure 7 illustre les pertes d'insertion dans le cas de l'utilisation d'un matériau de Si₃N₄ et dans le cas de l'utilisation d'un matériau PMN-PT <011> ;
- la figure 8 illustre le fonctionnement d'un commutateur MEMS RF en mode transmission en fonction de la fréquence, dans le cas de l'utilisation d'un matériau de Si₃N₄ et dans le cas de l'utilisation d'un matériau PMN-PT <011>
- les figures 9a et 9b illustrent le fonctionnement d'un commutateur MEMS RF en mode réflexion et montrent respectivement les coefficients S11 et S21 en fonction de la fréquence, dans le cas de l'utilisation d'un matériau de Si₃N₄ et dans le cas de l'utilisation d'un matériau PMN-PT <011> ;

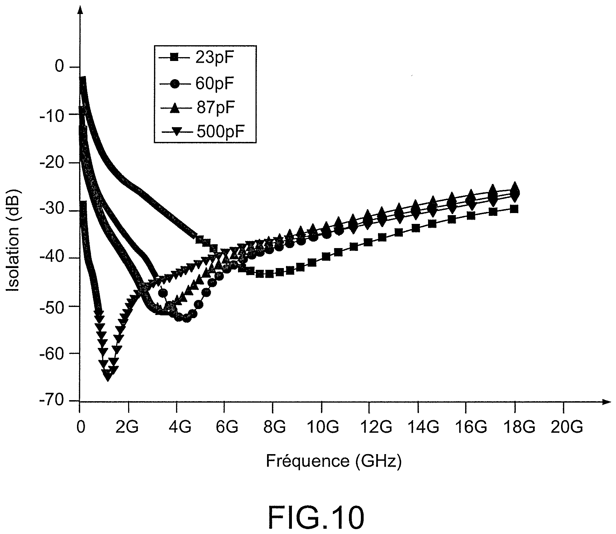

- la figure 10 illustre la mesure de l'isolation d'un composant MEMS PMN-PT, (la membrane étant bloquée dans son état d'actionnement).

La présente invention est décrite ci-après dans le cadre du matériau piézoélectrique PMN-PT qui dans certaines conditions d'orientation cristalline et de compositions peut être rendu électrostrictif présentant le double avantage de posséder une faible polarisation de rémanence et une grande stabilité thermique et plus précisément dans le cadre du matériau ferroélectrique relaxeur PMN-PT 65/35 électrostrictif en jouant sur l'orientation (<011>).

Pour rappel, un matériau ferroélectrique rélaxeur présente un pic de résonance très large et dépendant de la température.

Il est à noter que l'avantage de l'orientation <011> est supporté par l'article de X.Zhao et al. « Dielectric and piezoelectric performance of PMN-PT single crystals with composition around the MPB : influence of composition, poling field and crystal orientation », Mat. Sci. Eng. B 96 (2002) 254-262, qui a montré que le monocrystal PMN-PT d'orientation <011> possède une constante diélectrique élevée comparable à celle de l'orientation <001>.

Quand la couche ferroélectrique est orientée <011>, la polarisation effective est une projection de la polarisation suivant l'axe <001> sur l'axe <011>. Cette projection prend donc une valeur plus faible que la polarisation originale suivant l'axe <001>. Les couches ferroélectriques de 200 à 400nm d'épaisseur sont souvent polycrystallines et provoquent certaines désorientations locales autour de l'axe de croissance. Cet effet diminue encore plus la polarisation rémanente suivant l'axe <011>. Dans le cas idéal où l'axe de polarisation de la couche est l'axe <100>, la polarisation rémanente suivant l'axe <011> est nulle. La membrane est tenue seulement par une tension externe.

L'utilisation de cette orientation dans le cadre des composants MEMS est originale et de manière générale son obtention est connue pour être très délicate. Cependant la Demanderesse a pu valider également un procédé de croissance pour cette orientation. Ce procédé utilise une couche d'accrochage spécifique sur un substrat métallisé Pt/Au/Pt compatible avec la technologie MEMS et sera décrite plus en détails dans la suite de la description.

Afin de démontrer ces avantages, la Demanderesse a comparé les performances de couches de matériaux PMN-PT <001>, PMN-PT<111>, PMN-PT <011>, déposées sur des substrats (saphir ou silicium) et métallisés avec du Platine Pt.

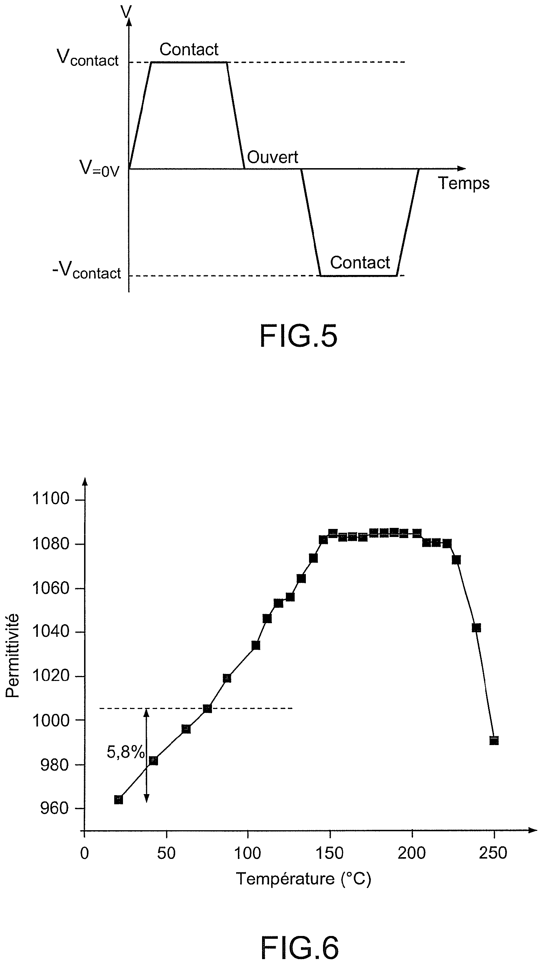

Le matériau PMN-PT a deux axes de polarisation possibles <001> (phase tétragonale) et <111> (phase monoclinique). Des mesures de cycle d'Hystérésis ont été réalisées sur différentes orientations (voir la Figure 4). Ces mesures montrent pour l'orientation <011>, un cycle d'Hystérésis beaucoup plus allongé que ceux des autres orientations, similaire à celui d'un matériau paraélectrique. En effet, on observe une polarisation rémanente 5 fois moins élevée pour l'orientation <011> que celle obtenue avec l'orientation <001>. Cette très faible polarisation rémanente assure le relâchement rapide de la membrane sans avoir à appliquer une tension Vrelease supplémentaire. On peut alors utiliser le mode de fonctionnement classique d'un MEMS-RF illustré en figure 5.

Les grandeurs ainsi mises en évidence par la Demanderesse sont répertoriées dans le tableau ci-dessous :

| Orientation | Polarisation rémanente | Champ coercitif |
|---|---|---|
| PMN-PT <001> | 18µC/cm² | 150KV/cm |
| PMN-PT <111> | 15µC/cm² | 100KV/cm |
| PMN-PT <011> | 2µC/cm² | 10KV/cm |

Les autres avantages du PMN-PT <011> sont présentés dans le tableau ci-après. La Demanderesse a mis en évidence que le matériau PMN-PT <011> supporte une tension plus élevée jusqu'à 60V.

| Matériau | Epaisseur | Orientation | Tension claquage | Courant de fuite |
|---|---|---|---|---|
| PMN-PT | 300nm | <001> | 35V (1100KV/cm) | 700µA/cm² |
| PMN-PT | 400nm | <011> | 60V (1500KV/cm) | 700µA/cm² |
| PMN-PT | 200nm | <111> | 18V (900KV/cm) | 3000µA/cm² |
| Si₃N₄ | 250nm | Amorphe | 55V (2200KV/cm) | 0,14µA/cm² |
| PZT | 250nm | <001>+<111> | 15V (600KV/cm) | 2000µA/cm² |

Il est à noter qu'un courant de fuite est utile pour évacuer des charges.

Le courant de fuite à faible tension dans un dispositif à base de Si₃N₄ est 0.14µA/cm² est ainsi très faible en comparaison de celui à base de PMN-PT <011> (700µA/cm²). En considérant que le matériau PMN-PT <011> se comporte comme un matériau électrostrictif (la polarisation est linéaire en fonction du champ) et que la polarisation rémanente est très proche de 0, cette comparaison permet de déduire que les charges s'évacuent plus rapidement dans le matériau PMN-PT<011> que dans le matériau Si₃N₄.

Les avantages d'un matériau ferroélectrique rélaxeur, dans son état électrostrictif, sur la fiabilité des composants MEMS sont les suivants :
- la dispersion diélectrique d'un rélaxeur est très large en fonction de la fréquence. Cet effet permet de travailler dans une plage de fréquence très large ;
- la tenue à la température : La température de Curie d'une couche mince PMN-PT (65/35) se trouve autour de 180°C. Au dessous de cette température, la constante diélectrique augmente en fonction de la température. La variation de la constante diélectrique entre 25 °C et 70 °C est de 5%. Ceci assure que pendant le fonctionnement du MEMS, un échauffement ne perturbe pas l'isolation, comme l'illustre la figure 6.

Concernant la sensibilité au champ, il a déjà été démontré que le changement de polarisation est plus rapide dans les matériaux relaxeurs que dans les ferroélectriques doux ou durs : Christelle Jullian, J.F. Li et D. Viehland, « Comparisons of polarisation switching in « hard », « soft » and relaxor ferroelectrics", J. Appl. Phys 95 (2004).

En effet, les matériaux ferroélectriques rélaxeurs peuvent charger et décharger rapidement entre la polarisation de saturation et la polarisation rémanente (qui est très faible). Ceci permet d'atteindre un temps d'activation de la membrane aussi rapide que 0,1µs. Le contrôle des mouvements de la membrane dans ce cas là dépend de la structure de la membrane elle-même et non plus du diélectrique. C'est un avantage clé pour créer des dispositifs MEMS RF au contrôle rapide.

| Type ferroélectrique | Temps de saturation | Type de relaxation |
|---|---|---|
| Doux PZT | 1µs | Lente |
| Dur PZT | 10 µs | Très lente |
| Relaxeur PLZT 10/65/35 | 0.1 µs | Rapide |

### Validation du domaine de fonctionnement du composant selon l'invention :

Prenant en compte la dépendance de la permittivité en fonction de la fréquence, une simulation avec le logiciel HFSS (High Frequency Simulation Software) a été effectuée pour valider l'intérêt de l'utilisation d'une couche 400nm de matériau PMN-PT <011> dans un dispositif MEMS RF devant travailler à 10GHz, de type de celui illustré en figures 1a et 1b.

Quand la membrane est à l'état haut, le signal est transmis. Le dispositif fonctionne quasiment avec la même perte d'insertion et le même coefficient de transmission d'un dispositif MEMS RF traditionnel où le diélectrique utilisé est Si₃N₄.

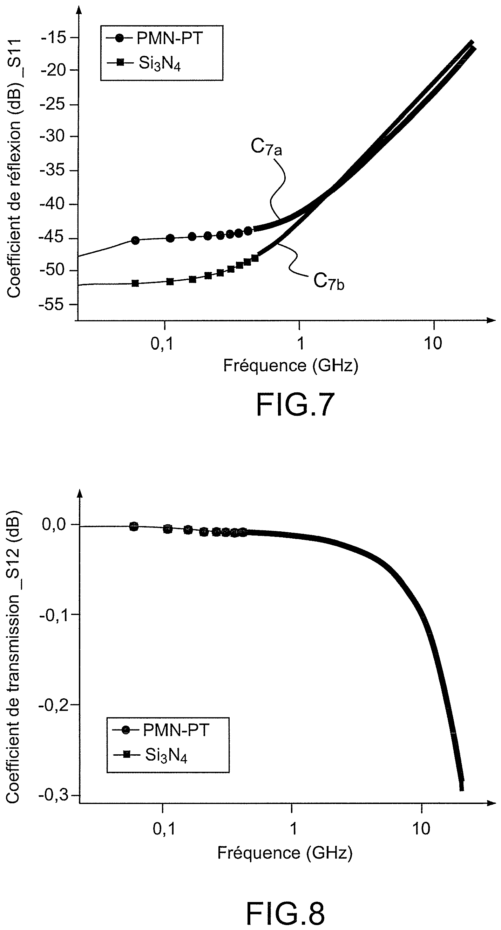

Quand la membrane est à l'état bas, le signal est complètement réfléchi. A 10GHz par exemple, le coefficient de réflexion de -0.17dB (en comparaison avec -0.55dB pour le coefficient de réflexion obtenu avec Si₃N₄) est obtenu avec une très bonne isolation de -40dB (comparer avec -10dB pour Si₃N₄). La plage de fréquence est très large, le dispositif peut travailler de 500MHz à 20 GHz, comme le met en évidence la figure 7 qui illustre les pertes d'insertion dans le cas de l'utilisation d'un matériau de Si₃N₄ (courbe C7a) et dans le cas de l'utilisation d'un matériau PMN-PT <011> (courbe C7b).

La figure 8 illustre par ailleurs le fonctionnement d'un commutateur MEMS RF modèle parallèle simple avec une couche de diélectrique de 400nm d'épaisseur, à l'état de transmission (PMN-PT vs Si₃N₄).

Quand la membrane est à l'état bas, le signal est complètement réfléchi. A 10GHz par exemple, le coefficient de réflexion de -0.17dB (en comparaison avec -0.55dB obtenu avec Si₃N₄) est obtenu avec une très bonne isolation de -40dB (en comparaison avec -10dB obtenu avec Si₃N₄). La plage de fréquence est très large, le dispositif peut travailler de 500MHz à 20 GHz.

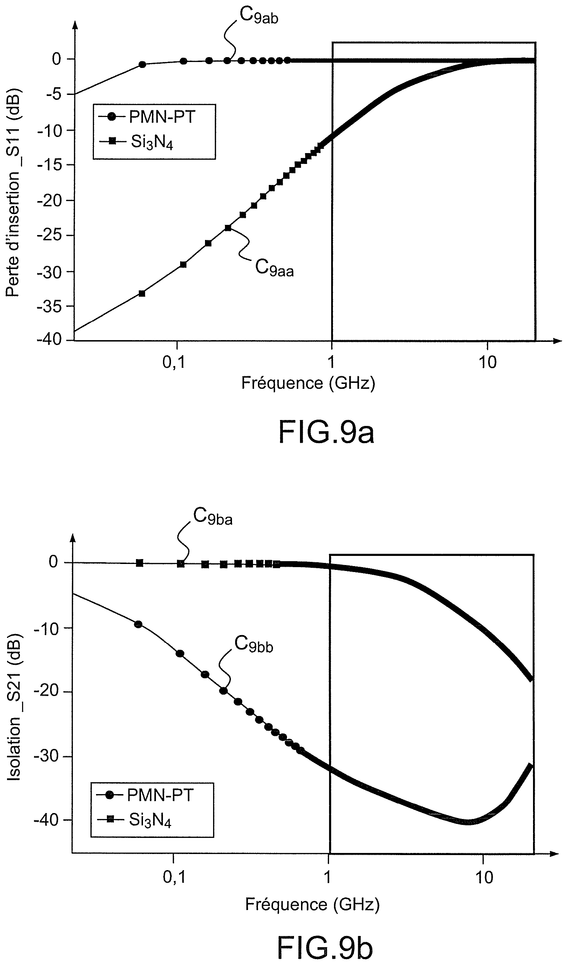

Les figures 9a et 9b illustrent le fonctionnement d'un commutateur MEMS RF modèle parallèle simple avec une couche de diélectrique de 400nm d'épaisseur, à l'état de réflexion (PMN-PT vs Si₃N₄) et montrent respectivement les coefficients S11 (courbes C₉ₐₐ et C_{9ab}) et S21 (courbes C_{9ba} et C_{9bb}) en fonction de la fréquence pour les deux matériaux.

### Exemple de procédé de fabrication d'une couche de PMN-PT <011> utilisée dans un composant MEMS RF de l'invention :

Sur un substrat de saphir ou de Si/SiO₂, on procède à la réalisation de lignes de métallisation RF comprenant l'empilement de couches suivant :
- une couche de Pt de 200nm ;
- une couche d'Au de 500nm ;
- une couche de Pt de 50nm ;
- une couche de PMN-PT de 400nm.

La couche de PMN-PT est réalisée par la technique de l'ablation laser (mais peut être réalisée par toute autre technique permettant le contrôle de la texture et l'orientation). La structure métallique tient parfaitement à haute température (pas d'alliage Pt-Au-Ti) et permet une bonne intégration de la couche ferroélectrique dans la technologie MEMS. La couche d'accrochage aide à orienter la couche ferroélectrique rélaxeur suivant l'orientation préférée pour le rendre dans un état électrostrictif.

On utilise avantageusement pour mener à bien cette opération un laser puissant focalisé sur une surface (4mmx4mm) de la cible (de taille de 1 ou 2 pouces). Cet effet ablate les particules de la cible et forme une zone luminescente des particules (qui est dans la plupart des cas perpendiculaire à la surface de l'échantillon). Les particules ablatées viennent se déposer sur un substrat chauffé et mis en position tournante. L'énergie de formation de la couche est à la fois thermique et dynamique.

L'avantage de cette méthode réside dans la capacité à transférer la stoechiométrie de la cible au substrat, et de contrôler l'orientation.

Les premières mesures de composant MEMS à l'état d'actionnement montrent un bon accord entre la simulation et la réalisation. La structure de test a une très bonne isolation (inférieur à -40dB) jusqu'à 10GHz. Une large plage de fréquence de fonctionnement (de 500MHz à 18GHz) du dispositif est également validée.

## Revendications

1. Composant MEMS-RF à temps d'activation rapide et destiné à des applications dans des domaines de fréquences inférieurs à 10 GHz comprenant un substrat isolant (S) comportant à la surface dudit substrat au moins une ligne RF (L_{RF}) située entre deux surfaces conductrices (M₁, M₂), ladite ligne RF étant au moins localement recouverte d'une couche de matériau diélectrique (M_{D}), ledit composant comprenant en outre une membrane (m) située au dessus de ladite ligne RF et en contact avec les deux surfaces conductrices **caractérisé en ce que** ledit matériau diélectrique est un matériau ferroélectrique de constante diélectrique supérieure à 600 et de polarisation rémanente inférieure à 5 µC.cm⁻²

2. Composant MEMS-RF selon la revendication 1, **caractérisé en ce que** le matériau ferroélectrique est un des matériaux suivants : PMN-PT, PLZT, PIN-PT, PZN-PT, PMN-PIN-PT, PMN-PYN-PT.

3. Composant MEMS-RF selon la revendication 2, **caractérisé en ce que** le matériau ferroélectrique est du PMN-PT de composition 65/35 et d'orientation cristalline <011>.

4. Composant MEMS-RF selon l'une des revendications précédentes, **caractérisé en ce que** l'épaisseur de la couche de matériau ferroélectrique est de l'ordre de quelques centaines de nanomètres.

5. Composant MEMS selon l'une des revendications précédentes, **caractérisé en ce qu'**il comprend en outre une couche intermédiaire entre la ligne RF et la couche de matériau ferroélectrique.

6. Composant MEMS-RF selon l'une des revendications précédentes, **caractérisé en ce que** la ligne RF comprend une structure multicouches pouvant être à base de platine et d'or, la couche d'or étant insérée entre deux couches de platine.

7. Composant MEMS-RF selon l'une des revendications précédentes, **caractérisé en ce que** le substrat est en saphir ou en silicium.

8. Procédé de fabrication d'un composant MEMS-RF selon l'une des revendications 1 à 7, et comprenant la réalisation d'une couche de matériau ferroélectrique à la surface d'un substrat **caractérisé en ce que** la réalisation de ladite couche de matériau ferroélectrique est effectuée par dépôt sur une couche d'accrochage.

9. Procédé de fabrication d'un composant MEMS-RF selon la revendication 8, **caractérisé en ce que** la couche d'accrochage est en oxyde conducteur, pouvant être du La_{1/3}Sr_{2/3}MnO₃.

10. Procédé de fabrication d'un composant MEMS-RF selon l'une des revendications 8 ou 9, **caractérisé en ce que** la couche de matériau ferroélectrique est réalisée par ablation laser d'une cible sur un substrat mis en rotation et chauffé.

## Patentansprüche

1. RF-MEMS-Bauelement mit schneller Aktivierungszeit, bestimmt für Anwendungen in Frequenzbereichen unter 10 GHz, beinhaltend ein Isolationssubstrat (S), welches an der Oberfläche des Substrates mindestens eine RF-Leitung (L_{RF}) enthält, welche zwischen zwei leitenden Flächen (M₁, M₂) angeordnet ist, wobei die RF-Leitung mindestens lokal mit einer Schicht aus dielektrischem Material (M_{D}) bedeckt ist, wobei das Bauelement zudem eine Membran (m) beinhaltet, befindlich oberhalb der RF-Leitung und in direktem Kontakt mit zwei leitenden Flächen, **dadurch gekennzeichnet, dass** das dielektrische Material ein ferroelektrisches Material mit einer dielektrischen Konstante über 600 und mit einer remanenten Polarisierung unter 5 µC.cm⁻² ist.

2. RF-MEMS-Bauelement nach Anspruch 1, **dadurch gekennzeichnet, dass** das ferroelektrische Material eines der folgenden Materialien ist: PMN-PT, PLZT, PIN-PT, PZN-PT, PMN-PIN-PT, PMN-PYN-PT.

3. RF-MEMS-Bauelement nach Anspruch 2, **dadurch gekennzeichnet, dass** das ferroelektrische Material PMN-PT mit einer 65/35-Zusammensetzung und einer Kristallausrichtung <011> ist.

4. RF-MEMS-Bauelement nach einem der vorhergehenden Ansprüche, **dadurch gekennzeichnet, dass** die Dicke des ferroelektrischen Materials im Bereich von einigen hundert Nanometern liegt.

5. MEMS-Bauelement nach einem der vorhergehenden Ansprüche, **dadurch gekennzeichnet, dass** es zudem eine Zwischenschicht zwischen der RF-Leitung und der Schicht aus ferroelektrischem Material beinhaltet.

6. RF-MEMS-Bauelement nach einem der vorhergehenden Ansprüche, **dadurch gekennzeichnet, dass** die RF-Leitung eine mehrschichtige Struktur beinhaltet, welche auf Grundlage von Platin und Gold gebildet sein kann, wobei die Goldschicht zwischen zwei Platinschichten eingelegt ist.

7. RF-MEMS-Bauelement nach einem der vorhergehenden Ansprüche, **dadurch gekennzeichnet, dass** das Substrat aus Saphir oder aus Silizium besteht.

8. Verfahren zur Herstellung eines RF-MEMS-Bauelementes nach einem der Ansprüche 1 bis 7, beinhaltend die Schaffung einer Schicht aus ferroelektrischem Material an der Oberfläche eines Substrates, **dadurch gekennzeichnet, dass** die Schaffung der Schicht aus ferroelektrischem Material durch Ablagern auf einer Haftschicht erfolgt.

9. Verfahren zur Herstellung eines RF-MEMS-Bauelementes nach Anspruch 8, **dadurch gekennzeichnet, dass** die Haftschicht aus einem leitenden Oxid besteht, welches La_{1/3}Sr_{2/3}MnO₃ sein kann.

10. Verfahren zur Herstellung eines RF-MEMS-Bauelementes nach einem der Ansprüche 8 oder 9, **dadurch gekennzeichnet, dass** die Schicht aus ferroelektrischem Material durch Laserablation eines Targets an einem Substrat geschaffen wird, welches in Rotation versetzt und erhitzt wird.

## Claims

1. An RF MEMS component with a fast activation time and intended for applications in frequency ranges below 10 GHz, comprising an insulating substrate (S) having, on the surface of said substrate, at least one RF line (L_{RF}) located between two conductive areas (M₁, M₂), said RF line being at least locally covered with a layer of dielectric material (M_{D}), said component further comprising a membrane (m) located above said RF line and making contact with the two conductive areas, **characterised in that** said dielectric material is a ferroelectric material having a dielectric constant higher than 600 and a remnant polarisation of less than 5 µC.cm⁻².

2. The RF MEMS component according to Claim 1, **characterised in that** the ferroelectric material is one of the following materials: PMN-PT, PLZT, PIN-PT, PZN-PT, PMN-PIN-PT, PMN-PYN-PT.

3. The RF MEMS component according to Claim 2, **characterised in that** the ferroelectric material is PMN-PT with 65/35 composition and <011> crystal orientation.

4. The RF MEMS component according to any of the preceding claims, **characterised in that** the thickness of the layer of ferroelectric material is in the range of several hundreds of nanometres.

5. The MEMS component according to any of the preceding claims, **characterised in that** it further comprises an intermediate layer between the RF line and the layer of ferroelectric material.

6. The RF MEMS component according to any of the preceding claims, **characterised in that** the RF line comprises a multi-layer structure that may be based on platinum and gold, the layer of gold being inserted between two layers of platinum.

7. The RF MEMS component according to any of the preceding claims, **characterised in that** the substrate is made of sapphire or silicon.

8. A method for producing an RF MEMS component according to any of Claims 1 to 7, and including the production of a layer of ferroelectric material on the surface of a substrate, **characterised in that** the production of said layer of ferroelectric material is achieved by depositing over a bond coat.

9. A method for producing an RF MEMS component according to Claim 8, **characterised in that** the bond layer is made of conductive oxide which may be La_{1/3}SR_{2/3}MnO₃.

10. A method for producing an RF MEMS component according to either of Claims 8 or 9, **characterised in that** the layer of ferroelectric material is produced by laser ablation of a target on a substrate that is rotated and heated.
